# EUROPÄISCHE PATENTSCHRIFT

(11) **EP 3 278 929 B1**
(45) Veröffentlichungstag und Bekanntmachung des Hinweises auf die Patenterteilung: **03.07.2019**
(21) Anmeldenummer: 16182221.8
(22) Anmeldetag: 01.08.2016
(51) Int. Cl.: B25B 1/02, B25B 1/08, B25B 1/24, B23Q 3/06, B23Q 3/10, F16J 15/10

(54) **SPANNVORRICHTUNG, INSBESONDERE SCHRAUBSTOCK**
CLAMPING DEVICE, IN PARTICULAR A VICE
DISPOSITIF DE SERRAGE, EN PARTICULIER ETAU

(43) Veröffentlichungstag der Anmeldung: 07.02.2018
(73) Patentinhaber: SMW-AUTOBLOK Spannsysteme GmbH, 88074 Meckenbeuren (DE)
(72) Erfinder: MAURER, Eckhard, 88094 Oberteuringen (DE)
(74) Vertreter: Engelhardt, Volker

(56) Entgegenhaltungen:
- EP-A1- 0 528 286
- EP-A2- 2 335 878
- EP-A2- 2 842 670
- WO-A1-2015/085987
- DE-B- 1 121 559
- US-A- 5 492 413

## Beschreibung

Die Erfindung bezieht sich auf eine Spannvorrichtung, insbesondere einen Schraubstock. Eine Spannvorrichtung ist beispielsweise aus WO2015/085987A1 bekannt.

Solche Spannvorrichtungen dienen im Wesentlichen dazu, Werkstücke möglichst positionsgenau im Bereich einer Werkzeugmaschine einzuspannen. Durch die Werkzeugmaschine wird anschließend das feststehende Werkstück bearbeitet, beispielsweise gefräst, gebohrt, gedrillt oder dgl.

Solche Spannvorrichtungen bestehen üblicherweise aus zwei Grundbackenbacken, die in einer in einem Gehäuse eingearbeiteten Führungsbahn axial beweglich gelagert sind, die durch einen Spindelantrieb aufeinander zu bzw. voneinander weg bewegt werden können. Die Grundbacken schließen dabei mit der oberen Stirnseite des Gehäuses ab, so dass eine plane Oberfläche entsteht. An die Grundbacken kann jeweils eine Spannbacke angebracht sein, die in Abhängigkeit von der Geometrie und der Größe des einzuspannenden Werkstückes ausgestaltet ist. Sobald die Grundbacken demnach betätigt werden, bewegen sich diese und die Spannbacken in Richtung des Werkstückes oder von diesem weg. Mit Hilfe der Kraft des Spindelantriebes kann demnach auch die vorgesehene Spannkraft, die von den Spannbacken auf das Werkstück aufgebracht ist, eingestellt sein.

Solche Spannvorrichtungen haben sich seit Jahrzehnten hinlänglich in der Praxis bewährt und werden in unterschiedlichsten konstruktiven Ausgestaltungen angeboten. Bei der Bearbeitung des Werkstückes fallen Späne und sonstige Verschmutzungspartikel an. Zudem werden oftmals Kühl- oder Schmiermittel eingesetzt, die für die Bearbeitung des Werkstückes erforderlich sind. Solche flüssigen und festen Fremdstoffe können in die Zwischenräume oder Luftspalte, die beispielsweise zwischen der Grundbacke und der Innenwand der Führungsnut vorhanden sind, eindringen. Durch diese flüssigen und festen Fremdstoffe werden jedoch die Gleiteigenschaften der Grundbacke entlang der Führungsnut beeinträchtigt, so dass beispielsweise die Spannkraft verringert ist oder die Grundbacke sogar in der Führungsbahn blockiert wird.

Es ist daher Aufgabe der Erfindung, eine Spannvorrichtung, insbesondere einen Schraubstock der eingangs genannten Gattung derart weiterzubilden, dass die vorhandenen Zwischenräume oder Luftspalte zwischen der Innenwand der Führungsbahn und der Grundbacke vollständig abgedichtet sind, um das Eindringen von Fremdpartikeln, insbesondere Schmierstoffe, Späne und dgl. zu verhindern, so dass die Gleiteigenschaften der Grundbacke entlang der Führungsbahn über einen möglichst langen Betriebszeitraum beibehalten ist.

Diese Aufgabe ist erfindungsgemäß durch die Merkmale des Patentanspruchs 1 gelöst.

Weitere vorteilhafte Weiterbildungen der Erfindung ergeben sich aus den Unteransprüchen.

Dadurch, dass die in dem Gehäuse vorhandenen Luftspalten zwischen der Grundbacke und der Innenwand der Führungsbahn sowie in der Trennebene zwischen den Grundbacken und an den Stirnseiten im Bereich der dort verlaufenden Führungsbahn jeweils eine Dichtung eingesetzt ist und dass die jeweilige Dichtung mittels einer Stützleiste in einer vorgegebenen Position gehalten ist, ist erreicht, dass die bei der Bearbeitung anfallenden Fremdstoffe, insbesondere Späne und Kühlmittelflüssigkeit, in das Innere des Gehäuses nicht eindringen können. Somit kann die Grundbacke mit einer konstanten Gleitreibung entlang der Führungsbahn bewegt werden und andere Beschädigungen durch die Fremdstoffe oder Späne werden vermieden.

Da die Abdichtung des Gehäuses mit Hilfe eines zweiteiligen Körpers, der aus einer elastischen Dichtung, beispielsweise aus Gummi, Kunststoff oder einem Gummi-Kunststoff-Gemisch, insbesondere einem PU-Schaum, gebildet ist und aus einer harten, biegefesten Stützleiste, insbesondere aus einem metallischen Werkstoff, entsteht zum einen eine zuverlässige Abdichtung und zum anderen wird diese Abdichtung über einen langen Betriebszeitraum, auch durch äußere Kräfte, geschützt.

Die Stützleiste kann vorteilhafterweise an der Außenseite bzw. den Stirnseiten des Gehäuses mittels Befestigungsschrauben oder Klemmkeilen arretiert sein, so dass diese mit dem Gehäuse lösbar verbunden ist. Sollte nach einer bestimmten Betriebsdauer die Dichtung porös sein, kann diese ohne weiteres ausgetauscht werden. Zudem ist ein Wechsel der Grundbacken problemlos möglich, falls diese auszuwechseln sind.

In der Zeichnung ist ein erfindungsgemäßes Ausführungsbeispiel einer Spannvorrichtung dargestellt, das nachfolgend näher erläutert ist. Im Einzelnen zeigt:
- Figur 1: eine Spannvorrichtung in Form eines Schraubstocks mit einem Gehäuse, in dem eine Führungsbahn zur Aufnahme von zwei Grundbacken vorgesehen ist, die mittels eines Spindelantriebs axial beweglich angetrieben sind und mit drei Stützleisten, durch die die Luftspalte zwischen den Grundbacken und der Innenwand der Führungsbahn sowie in der Trennebene der beiden Grundbacken verschlossen sind, in perspektivischer Ansicht,
- Figur 2: die Stützleisten gemäß Figur 1, mit zwei weiteren im Bereich der Stirnseiten des Gehäuses angeordneten Stützleisten, die in ihren jeweiligen Knotenpunkt fest miteinander verbunden sind, in perspektivischer Ansicht,
- Figur 3: die Spannvorrichtung gemäß Figur 1, entlang des Längsschnittes III-III in Pfeilrichtung und mit zwei an der jeweiligen Grundbacke angebrachten Spannbacken, durch die ein Werkstück ortsfest gehalten ist,
- Figur 4a: eine vergrößerte Schnittansicht durch die Stirnseite zwischen den beiden Grundbacken gemäß Figur 3,
- Figur 4b: ein vergrößerter Ausschnitt im Übergangsbereich zwischen der Führungsbahn und einer der Grundbacken und
- Figur 4c: eine vergrößerte Detailansicht gem. Figur 3 im Bereich der Trennebene zwischen den beiden Grundbacken.

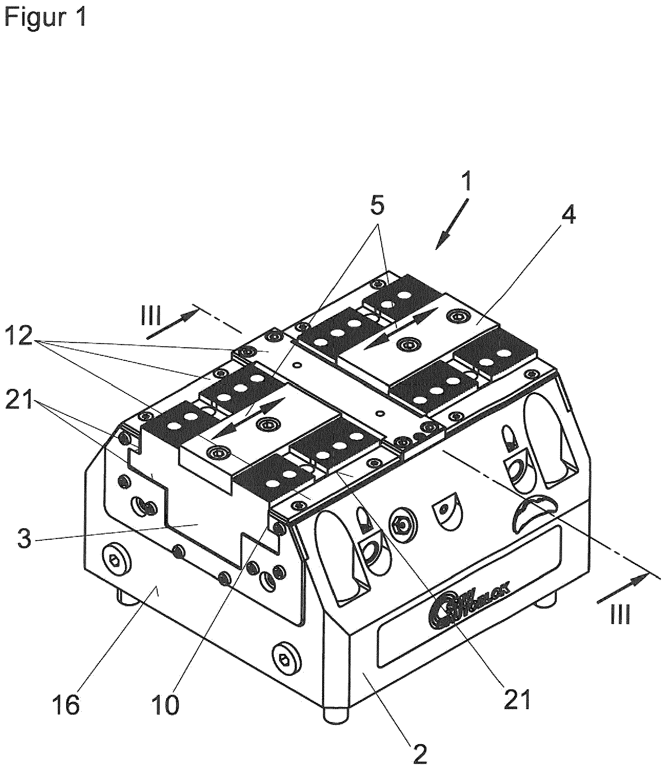

Aus Figur 1 ist eine Spannvorrichtung zu entnehmen, die auch als Schraubstock bezeichnet ist. Durch die Spannvorrichtung 1 soll im Raum, beispielsweise an einer Werkzeugmaschine, ein Werkstück 20 ortsfest gehalten sein, um dieses bearbeiten zu können.

Die Spannvorrichtung besteht aus einem Gehäuse 2, in das in Längsrichtung des Gehäuses 2 eine Führungsbahn 10 eingearbeitet ist, in die zwei Grundbacken 3 und 4 durch Einschieben an den beiden gegenüberliegenden Stirnseiten 16 einführbar sind. Die Grundbacken 3, 4 sind trieblich mit einem Spindelantrieb 9 gekoppelt und können von diesem axial bewegt werden.

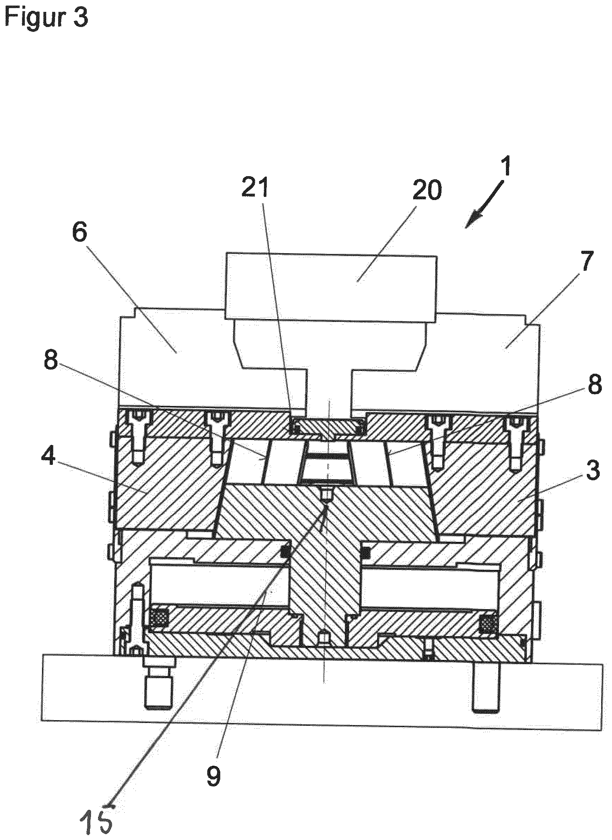

Insbesondere in Figur 3 ist gezeigt, dass die beiden Grundbacken 3, 4 eine schräge Fläche 8 aufweisen, die aufeinander zugeneigt sind und sobald der Spindelantrieb 9 entlang der schrägen Flächen 8 bewegt ist, werden die Grundbacken 3, 4 entweder auseinander gedrückt oder aufeinander zugestellt. Eine der beiden Grundbacken 3 oder 4 kann auch als feststehender Anschlag ausgestaltet sein, auf den sich die eine Grundbacke 3 zu- bzw. wegbewegt.

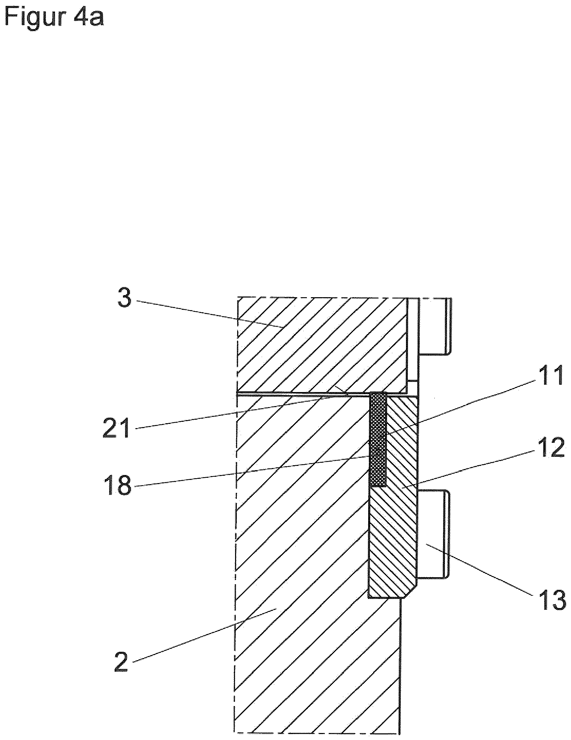

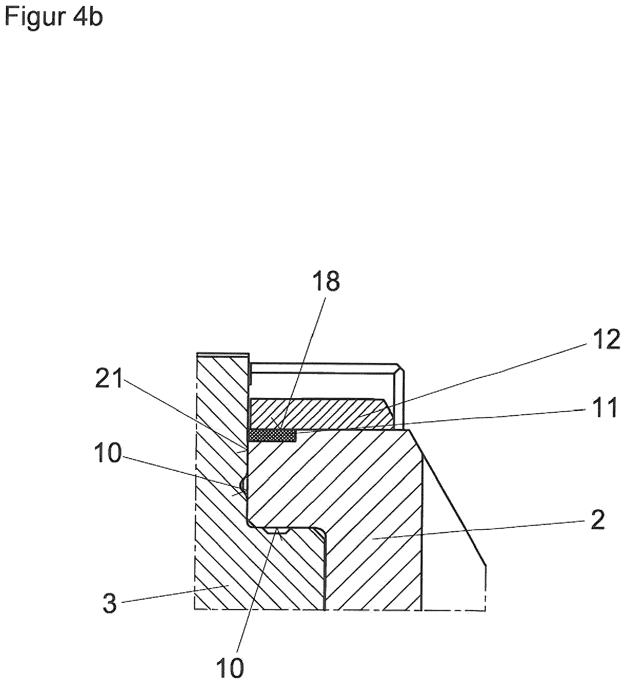

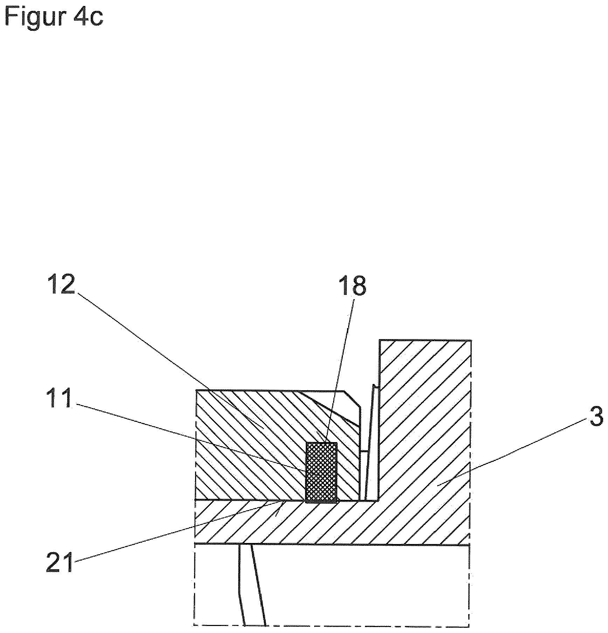

Die Trennebene zwischen den beiden Grundbacken 3, 4 ist mit der Bezugsziffer 15 versehen. Bekanntlich entstehen in den jeweiligen Übergangsbereichen zwischen den beiden Grundbacken 3, 4 sowie zwischen diesen und der Innenwand der Führungsbahn 10, Luftspalte 21, in die Späne oder sonstige Schmierflüssigkeiten eindringen können, durch die die Gleiteigenschaft der Grundbacken 3, 4 entlang der Führungsbahn 10 mitunter erheblich behindert oder sogar vollständig eingeschränkt ist. Diese Luftspalte 21 sollen mittels einer Dichtung 11, die aus einem Kunststoff, PU-Schaum, Gummi oder aus einem Kunststoff-Gummi-Gemisch gebildet ist, abgedichtet sein. Dies kann insbesondere den Figuren 4a, 4b und 4c entnommen werden. Da die Dichtung 11 aus einem elastischen, weichen Material hergestellt ist, kann aufgrund der Bewegung der Grundbacken 3, 4 ein Herausgleiten der Dichtung 11 aus dem jeweiligen Luftspalt 21 vorliegen. Um dies zu verhindern, ist jeder Dichtung 11 eine Stützleiste 12 zugeordnet, die mittels Befestigungsschrauben 13 oder Klemmkeilen 17 an dem Gehäuse 2 gehalten ist.

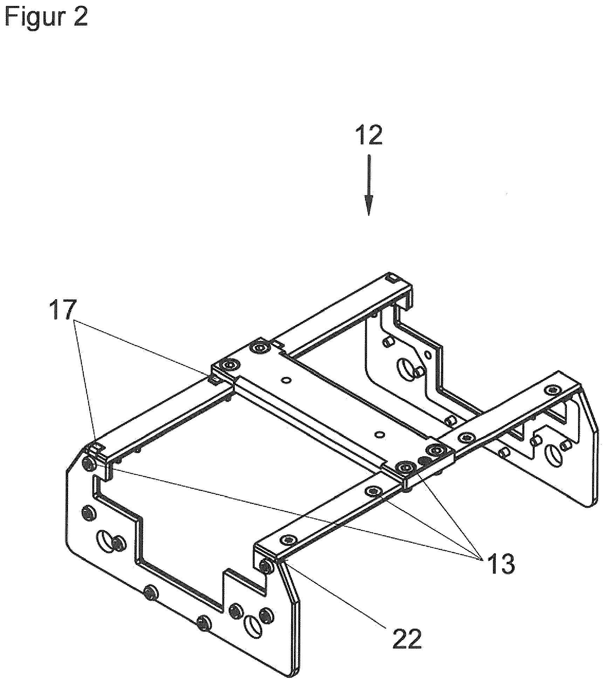

Aus Figur 2 ist ersichtlich, dass insgesamt fünf Stützleisten 12 zu einer Gitterstruktur zusammengebaut sind. Die jeweils benachbarten Stützleisten 12 sind in den jeweiligen Knotenpunkten 22 miteinander verschraubt und bilden demnach eine feste Struktur, die im Bereich der Luftspalte 21, die zwischen den beiden Grundbacken 3, 4 im Bereich der Trennebene 15 sowie zwischen den Grundbacken 3, 4 und der Innenwand der Führungsbahn 10 vorhanden ist, verläuft. Darüber hinaus sollen auch die Luftspalte 21, die im Bereich der Stirnseiten 16 des Gehäuses 2 vorhanden sind, abgedeckt sein.

Die Dichtung 11 kann entweder fest mit der jeweiligen Stützleiste 12, beispielsweise mittels einer Klebe- oder Lötnaht, verbunden sein oder die Dichtung 11 wird zunächst separat in den jeweiligen Luftspalt 21 eingesetzt und anschließend wird die Dichtung 11 mittels der Stützleiste 12 in dem jeweiligen Luftspalt 21 in der vorgegebenen Position gehalten. Somit kann die jeweilige Grundbacke 3, 4, die gemäß Figur 3 jeweils eine Spannbacke 7, 8 trägt, ohne Weiteres aus der jeweiligen Führungsbahn ausgeschoben sein, um beispielsweise die Grundbacken 3, 4 zu wechseln oder die Führungsbahn 10 gründlich zu säubern.

Zur Aufnahme der Dichtung 11 ist entweder in der Stützleiste 12 oder in dem Gehäuse 2 eine U- oder L-förmige Kammer 18 eingearbeitet, in die die jeweilige Dichtung 11 eingesetzt ist. Da die Dichtung 11 aus einem elastischen, biegeweichen Werkstoff hergestellt ist, kann die Abmessung der Dichtung 11 größer bemessen sein als die Höhe oder Länge der Kammer 18, so dass bei der Montage der Stützleiste 12 die Dichtung 11 zwischen dieser und der Oberfläche des Gehäuses 2 zusammengedrückt ist. Somit liegt die Dichtung 11 unter einer bestimmten Vorspannung zwischen der Stützleiste 12 und dem jeweiligen Bereich des Gehäuses 2 an.

## Patentansprüche

1. Spannvorrichtung (1), insbesondere Schraubstock, mit einem Gehäuse (2), in dem eine Führungsbahn (10) vorgesehen ist und mit mindestens zwei Grundbacken (3, 4), an denen jeweils eine Spannbacke (6, 7) befestigbar ist,
wobei zwischen den jeweiligen Grundbacken (3, 4) und der Innenwand der Führungsbahn (10) ein Luftspalt (21) sowie ein Luftspalt (21) in einer Trennebene (15) zwischen den Grundbacken (3, 4) und an den Stirnseiten (16) im Bereich der dort verlaufenden Führungsbahn (10) vorgesehen ist, und dass in dem jeweiligen Luftspalt (21) jeweils eine Dichtung (11) eingesetzt ist, **dadurch gekennzeichnet,**
**dass** die jeweilige Dichtung (11) mittels einer an dem Gehäuse (2) der Spannvorrichtung (1) befestigten Stützleiste (12) in einer vorgegebenen Position gehalten ist.

2. Spannvorrichtung nach Anspruch 1,
**dadurch gekennzeichnet,**
**dass** die Stützleiste (12) an dem Gehäuse (2) vorzugsweise mittels Befestigungsschrauben (13) und/oder mittels an der Stützleiste (12) angebrachten Klemmkeilen (17) befestigt ist.

3. Spannvorrichtung nach Anspruch 1 oder 2,
**dadurch gekennzeichnet,**
**dass** die jeweilige Stützleiste (12) aus einem metallischen Werkstoff, vorzugsweise aus Blech, und dass die Dichtung (11) aus einem Gummi, aus einem Kunststoff oder aus einem Gummi-Kunststoff-Gemisch hergestellt sind.

4. Spannvorrichtung nach einem der vorgenannten Ansprüche,
**dadurch gekennzeichnet,**
**dass** die jeweilige Stützleiste (12) im montierten Zustand eine an die Luftspalt-Verläufe in dem Gehäuse (2) angepasste Kontur aufweist und dass die jeweiligen Stützleisten (12) aneinander in den jeweiligen Knotenpunkten (22) befestigt sind.

5. Spannvorrichtung nach einem der vorgenannten Ansprüche,
**dadurch gekennzeichnet,**
**dass** in die jeweilige Stützleiste (12) und/oder in dem Gehäuse (2) eine U- oder L-förmige Kammer (18) eingearbeitet ist, in die die jeweilige Dichtung (11) eingesetzt ist.

6. Spannvorrichtung nach Anspruch 5,
**dadurch gekennzeichnet,**
**dass** die Höhen- und/oder Längenabmessung der Dichtung (11) größer bemessen ist als die jeweilige Höhen- und/oder Längenabmessung der Kammer (18) und dass die Dichtung (11) durch den Zusammenbau der Stützleiste (12)
an dem Gehäuse (2) zusammengedrückt ist und unter Vorspannung in der Kammer (18) gehalten ist.

## Claims

1. A clamping fixture (1), in particular a vice, with a housing (2) in which a guide track (10) is provided and with at least two base jaws (3, 4) to each of which a clamping jaw (6, 7) can be attached, in which case an air gap (21) and an air gap (21) in a parting plane (15) is provided between the base jaws (3, 4) and on the end faces (16) in the area of the guide track (10) running there, and that a seal (11) is inserted into each of the air gaps (21),
**characterised in that,**
the particular seal (11) is held in a specified position by means of a support strip (12) attached to the housing (2) of the clamping fixture (1).

2. The clamping fixture in accordance with Claim 1,
**characterised in that,**
the support strip (12) is attached to the housing (2), preferably by means of fastening screws (13) and/or by means of clamping wedges (17) attached to the support strip (12).

3. The clamping fixture in accordance with Claim 1 or 2,
**characterised in that,**
the particular support strip (12) is made of a metallic material, preferably sheet metal, and that the seal (11) is made from rubber, plastic or a rubber/plastic blend.

4. The clamping fixture in accordance with one of the aforementioned claims,
**characterised in that,**
when the support strip (12) is installed, it has a contour adapted to the air gap profiles in the housing (2) and that the corresponding support strips (12) are attached to one another at the relevant nodal points (22).

5. The clamping fixture in accordance with one of the aforementioned claims,
**characterised in that,**
the particular support strip (12) and/or the housing (2) has/have a U-shaped or L-shaped chamber (18) worked into it/them in which the seal (11) in question is inserted.

6. The clamping fixture in accordance with Claim 5,
**characterised in that,**
the height and/or length dimension(s) of the seal (11) is/are larger than the corresponding height and/or length dimension(s) of the chamber (18) and that the seal (11) is compressed by the assembly of the support strip (12) on the housing (2) and is held under preload in the chamber (18).

## Revendications

1. Dispositif de serrage (1), en particulier un étau, avec un boîtier (2) dans lequel il est prévu une piste de guidage (10) et avec au moins deux mors de base (3, 4) sur lesquels il se laisse fixer respectivement un mors de serrage (6, 7)
où, entre les mors de base respectifs (3, 4) et la paroi intérieure de la piste de guidage (10), il est prévu un interstice (21) ainsi qu'un interstice (21) dans un plan de séparation (15) entre les mors de base (3, 4) et sur les faces frontales (16) au niveau de la piste de guidage (10) s'y étendant, et que dans l'interstice respectif (21), il est monté respectivement un joint (11),
**caractérisé en ce que**
moyennant une réglette d'appui (12) fixée sur le boîtier (2) du dispositif de serrage (1), le joint respectif (11) est positionné dans une position définie.

2. Dispositif de serrage d'après la revendication 1,
**caractérisé en ce que**
la réglette d'appui (12) est fixée sur le boîtier (2) de préférence par des vis de fixation (13) et/ou par des coins de serrage (17) montés sur la réglette d'appui (12).

3. Dispositif de serrage d'après les revendications 1 ou 2,
**caractérisé en ce que**
la réglette d'appui respective (12) est réalisée en matériau métallique, de préférence en tôle, et que le joint (11) est réalisé en caoutchouc, en matière synthétique ou en un mélange de caoutchouc et de matière synthétique.

4. Dispositif de serrage d'après une des revendications précédentes,
**caractérisé en ce que**
montée, la réglette d'appui respective (12) possède un contour adapté aux orientations des interstices dans le boîtier (2) et que les réglettes d'appui respectives (12) sont fixées ensemble dans les noeuds respectifs (22).

5. Dispositif de serrage d'après une des revendications précédentes,
**caractérisé en ce que**
dans la réglette d'appui respective (12) et/ou dans le boîtier (2), il est prévu une chambre (18) en forme d'un U ou d'un L recevant le joint respectif (11).

6. Dispositif de serrage d'après la revendication 5,
**caractérisé en ce que**
les dimensions en hauteur et/ou en longueur du joint (11) sont plus grandes que les dimensions en hauteur et/ou en longueur respectives de la chambre (18) et que le joint (11) est comprimé par l'assemblage de la réglette d'appui (12) sur le boîtier (2), puis retenu avec pré-tension dans la chambre (18).
